# EUROPEAN PATENT SPECIFICATION

(11) **EP 3 613 699 B1**
(45) Date of publication and mention of the grant of the patent: **24.06.2026**
(21) Application number: 19176542.9
(22) Date of filing: 24.05.2019
(51) Int. Cl.: B66C 19/00, B66F 17/00

(54) **INSPECTION SYSTEM FOR CONTAINER**
INSPEKTIONSSYSTEM FÜR EINEN BEHÄLTER
SYSTÈME D'INSPECTION POUR CONTENEURS

(30) Priority: 24.08.2018 KR 20180099002
(43) Date of publication of application: 26.02.2020
(73) Proprietor: LASE Industrielle Lasertechnik GmbH, 28359 Bremen (DE)
(72) Inventor: HWANG, Jin Sik, 46767 Kangseo-gu, Pusan (KR); LEE, Chang Kyun, 46767 Kangseo-gu, Pusan (KR); LEE, Young Sik, 46767 Kangseo-gu, Pusan (KR); AMBROSY, Lars, 28209 Bremen (DE)
(74) Representative: Farago-Schauer, Peter Andreas

(56) References cited:
- EP-A1- 3 296 247
- CN-A- 105 819 341
- CN-A- 106 829 742
- CN-U- 207 046 712
- CN-Y- 201 198 441
- KR-A- 20100 058 282

## Description

### [Technical Field]

The present invention relates to an inspection system for container which is unloaded from a ship and is to be loaded by a crane in a load space.

### [Background]

When containers are transported by ships, the containers are transported in a state in which the containers are stacked vertically in the ship. As a means for fixing the containers, a device called a corner casting is provided at each of the corners of the container. A device called a twistlock cone is inserted into the corner casting to couple a lower end side corner casting of the container placed at an upper side and an upper end side corner casting of the container placed at a lower side, such that the containers are vertically coupled to each other.

Meanwhile, in a case in which a container in which freight is loaded is unloaded from a ship and then stacked at a storage yard in a harbor, the containers are not vertically coupled to make it easy to transport the stacked containers. Therefore, the twistlock cone, which is coupled to the corner casting at the lower end of the container, needs to be removed from the container which has been unloaded from the ship and will be stacked at the storage yard.

The process of removing the twistlock cone is performed after the container is unloaded from the ship. If the containers from which the twistlock cones are not removed are stacked vertically at the storage yard as they are, some corner castings of the containers remain coupled to the twistlock cones in the state in which the containers are stacked at the storage yard.

In a case in which the container is lifted up from the storage yard by a crane to take out the container of which some or all of the corner castings at the lower end thereof are coupled to the corner castings of the container at the lower side, the container, which is placed at the lower side of the container intended to be taken out, is also lifted up due to the coupled corner castings.

The situation in which the container, which is not intended to be taken out, is lifted up together with the container intended to be taken out is an unintended situation which causes problems. When the container, which is lifted up together with the container intended to be taken out, is lifted up in the state in which only some corner castings at the upper end are coupled, there are problems in that the container is tilted and an eccentric load is applied to the crane. In a serious case, there are problems in that the container falls or collides with other containers, and damage to a hoist of the crane is caused.

Therefore, when lifting up the container, which is unloaded from the ship, loaded on a trailer, and transported to the storage yard, by using the crane disposed at the storage yard, an operator needs to check, with the naked eye, whether there is an unreleased twistlock cone which is not removed from the corner casting at the lower side of the container and remains coupled to the corner casting, and then the operator needs to remove the remaining twistlock cone and then stack the container.

However, if the process is performed as it is when the operator does not recognize the remaining twistlock cone because of carelessness or negligence by the operator, there often occurs a problem when the stacked container is taken out.

### [Related Art]

WO 2010 010977 A1 discloses a method for inspection of and an apparatus for unloading a container from a trailer of a tractor, the apparatus comprising a frame, loading means, sensors for sensing the container and for sensing twistlocks, and a control device which determines an abnormality. In particular, a skew resistance system is disclosed which senses the alignment between a container transportation vehicle and a container to guide loading and unloading operations, comprising: a skew sensing ultrasonic sensor that senses the position of the container corresponding to the alignment of the container; a tilting cylinder that adjusts the position of a twist lock of the container transportation vehicle according to the position of the container sensed by the skew sensing ultrasonic sensor; a tilting position ultrasonic sensor that senses the position of the twist lock; and a tilting control device for comparing and analyzing the sensed positions of the container and the twist lock.

CN 106 829 742 A discloses an inspection system having a 2D laser scanner at a post of a container crane which scans a truck and a container thereon by a vertical laser beam. From a vertical 2D profile obtained in this way, it can be determined that the container has got stuck to the truck with a twistlock, which is not directly visible. That is, disclosed is an inspection system for container which is unloaded from a ship and is to be loaded by a crane in a load space; the inspection system comprising: a laser scanner which scans an exterior shape of the container by emitting a laser beam to the container to be loaded in the load space; and a control device which receives scan data obtained by the laser scanner and forms a two-dimensional image of a scanning target from the received data, wherein when the crane moves the container upward to load the container in the load space, the laser scanner is configured to scan the exterior shape of the container by sequentially emitting the laser beams at a height at which the laser scanner is installed, and receiving the reflected laser beams, and the control device forms a two-dimensional image related to a contour of the container from the data received from the laser scanner.

CN 105 819 341 A discloses to use three-dimensional laser scanners for boats and ships outline identification under dock bridge.

KR 2010 0058282 A discloses a 3D surface image acquisitation system for 3D image pick up of a container on a truck passing a gate house. Said system allows to determine an abnormality of the container.

### [Technical Problem]

In consideration of the aforementioned problems occurring during the process of stacking the containers, the present invention has been made in an effort to provide an inspection system that finds out whether there is an unreleased twistlock cone on a container during the process of stacking the container.

Specifically, the present invention has been made in an effort to provide an inspection system that automatically finds out whether there is an unreleased twistlock cone on a container during a process of lifting up, by using a crane, the container stacked on a trailer, without having an operator to observe the container with the naked eye.

Additionally, the present invention has been made in an effort to provide an inspection system that automatically finds out abnormalities of a container, such as a tilt of the container or opening of a door, during a process of lifting up, by using a crane, the container stacked on a trailer.

### [Technical Solution]

The aforementioned objects of the present invention are achieved by an inspection system according to claim 1 which inspects a container, which is to be loaded, from a crane for loading the container, which is unloaded from a ship, in a load space.

The container inspection system includes: a laser scanner which scans an exterior shape of a container by emitting a laser beam to the container to be loaded in a load space; and a control device which receives scan data obtained by the laser scanner and forms a three-dimensional image of a scanning target from the received data, in which when the crane moves the container upward to load the container in the load space, the laser scanner is configured to scan the exterior shape of the container by sequentially emitting the horizontal laser beams at a height at which the laser scanner is installed, and receiving the reflected laser beams, and the control device forms a three-dimensional image related to a contour of the container from the data received from the laser scanner, determines an unreleased twistlock cone and creates an alarm signal when it is determined that there is an image of a portion protruding from a profile of a lower end of the container.

In the inspection system, when the crane lifts up the container to load the container in the load space, the laser scanner disposed at a predetermined height sequentially scans the container, a contour line is extracted by synthesizing an image of the container from scan data, and then whether there is a protruding portion on the contour line of the container which is configured as a straight line is determined, and as a result, it is possible to automatically determine whether the twistlock cone is not released from and remains on the container to be loaded.

In particular, it is not necessary to scan the container while moving around the container, and the laser scanner is fixed and installed on the crane or at the periphery of the crane, and a typical process of loading the container is performed, such that it is possible to inspect whether there is a twistlock cone in an unreleased state on the container.

Therefore, it is possible to automatically inspect the unreleased twistlock cone by using a simple configuration without changing a configuration of the crane in use or changing the process, and as a result, the container in the state in which the twistlock cone is not released is prevented from being loaded.

Meanwhile, according to the aforementioned configurations, the control device may determine an abnormality and create an alarm signal when the profile of the lower end of the container is tilted from horizontality at a predetermined angle or larger in the three-dimensional image related to the contour of the container, and the control device may determine that a door of the container is opened and may create an alarm signal when it is determined that there is an image of a portion protruding from a profile of a rear surface of the container in the three-dimensional image related to the contour of the container.

The additional abnormality detection may be configured through algorithm for reading out the image by the control device without adding a separate hardware configuration.

In the inspection system, the multiple laser scanners are provided at a height higher than a height of a transporting vehicle for transporting the container to a traveling path outside the load space, the laser scanners are spaced apart from one another with a width larger than a length of the container and emit the horizontal laser beams within a predetermined angle toward the container placed on the traveling path, and the laser scanners are configured such that the container is placed at a position at which the horizontal laser beams emitted from the multiple laser scanners overlap one another.

Since the laser scanners are installed higher than the transporting vehicle, there is no likelihood that the scanning of the laser scanner is distorted by the transporting vehicle or the transporting vehicle is included in the image formed by the control device, which causes an error in reading out the image.

In particular, the laser scanner is disposed at a crane side, and the laser scanner emits a laser beam toward the traveling path opposite to the crane, such that there is almost no likelihood that the other objects, other than the container, are included in the image formed by the scanning of the laser scanner, and as a result, accuracy in forming and reading out the image of the container is improved.

In addition, the image of the container is formed based on multiple scan data obtained by scanning the container by using the multiple laser scanners disposed to be spaced apart from one another in the longitudinal direction of the container, such that accuracy in forming the image is improved, and there is no situation in which the unreleased twistlock cone is not scanned due to the arrangement of the laser scanners.

### [Brief Description of Drawings]

FIGS. 1 to 3 each are a front view, a side view, and a top plan view illustrating a configuration of a gantry crane used for a monitoring system according to an exemplary embodiment of the present invention.
FIGS. 4 and 5 each are a front view and a top plan view illustrating a state in which the monitoring system according to the exemplary embodiment of the present invention operates.
FIG. 6 is an image of a container which is obtained by the monitoring system according to the exemplary embodiment of the present invention.

### [Best Mode for Carrying Out the Invention]

Hereinafter, a configuration and an operation of an inspection system according to an exemplary embodiment of the present invention will be described as specific contents for carrying out the present invention.

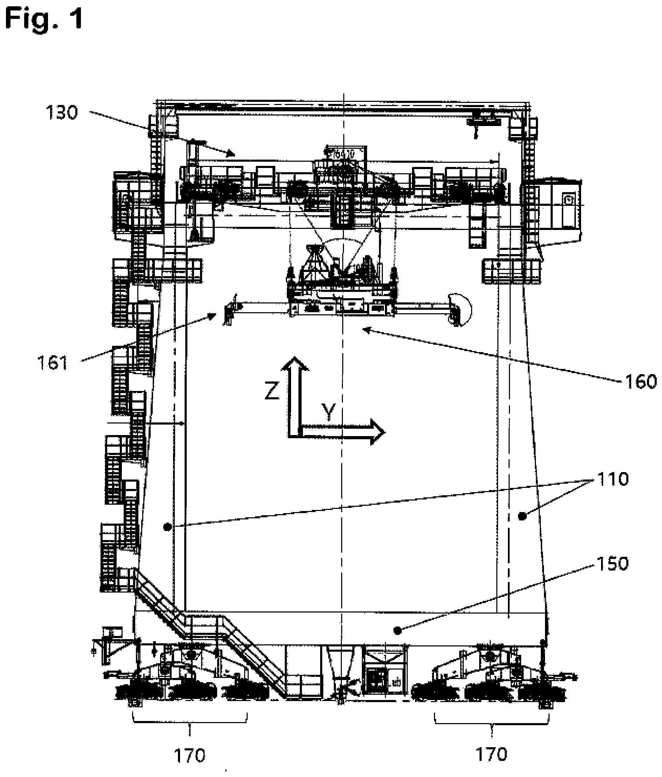

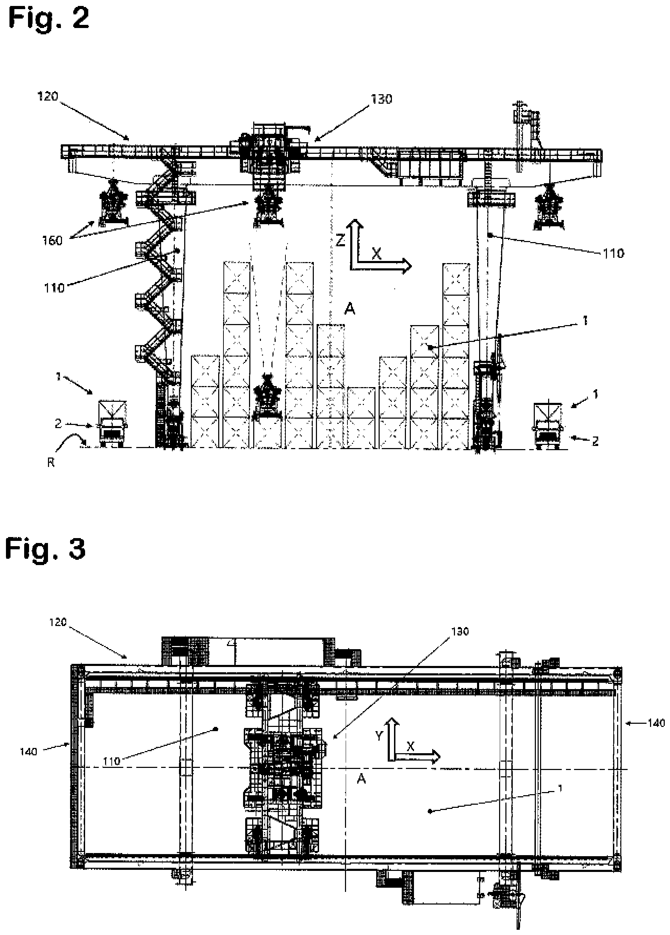

First, a configuration and an operation of a gantry crane to which the inspection system according to the present exemplary embodiment is applied will be described with reference to FIGS. 1 to 3.

A gantry crane 100 has four posts 110 which are disposed in a vertical direction (Z-axis), and two upper frames 120, which are disposed in parallel with each other and traverse a load space A for containers, are disposed at upper ends of the post 110.

The two posts 110 are disposed outside each of both sides of the load space A, and the upper frame 120 is coupled to the upper end of the two posts 110 which are spaced apart from each other with the load space A disposed therebetween.

Rails (not illustrated) are provided on the upper frames 120, and a trolley 130, which extends in a direction (Y-axis) perpendicular to an extension direction (X-axis) of the upper frames 120, are provided between the upper frames and configured to move along the rails of the upper frame 120. In addition, hoists 160, which are suspended by wires and move upward and downward, are provided under the trolley 130, and picking arms 161, which pick up and transport the containers, are provided on the hoists.

Two reinforcing frames 140, which connect the upper frames and extend in the direction (Y-axis) perpendicular to the upper frames on the same plane, are disposed at both end portions in a longitudinal direction of the upper frame 120.

Meanwhile, two support frames 150, which are disposed in the Y-axis direction perpendicular to the upper frames 120 and connect the posts, are provided at lower ends of the posts 110, and the two support frames 150 are structured so that a load of the gantry crane 100 including the posts 110 is supported by the support frames 150.

Six moving carriages 170 are disposed at lower sides of the support frames 150 to support the support frames 150. As the moving carriages 170 move in the extension direction of the support frame 150 along rails (not illustrated) installed on the ground surface in the Y-axis direction, the gantry crane 100 may move in the Y-axis direction along the rails.

A traveling path R, along which a trailer, which is loaded with containers, and a tractor 2, which tows the trailer, travel and stop, is disposed outside the load space A and outside the posts 100 and the support frames 150.

The upper frames 120 pass the positions of the posts 100 and extend above the traveling path R, such that the trolley 130 may move above the traveling path, and the hoist 160 may move downward toward an upper side of the trailer parked on the traveling path A.

As the moving carriages 170 move along the rails, the gantry crane 100 moves in the Y-axis direction to a position at which the container is to be stacked or a position at which the container to be taken out is stacked, and the trolley 130 moves along the upper frames 120 in the X-axis direction. Therefore, the hoist 160 for moving the container may move between a position at which the hoist 160 loads the container in the load space and a position at which the hoist 160 unloads the container from the trailer.

To stack a container 1 transported by the trailer, the tractor 2 stops at a position in the Y direction which corresponds to a stacking position, the trolley 130 moves along the upper frames 120 in the X-axis direction to the outside of the posts 110 and then moves to the position at which the tractor 2 stops, the hoist 160 moves downward and then moves upward after the picking arm picks up the container 1, and the hoist 160 moves to the stacking position.

Hereinafter, a configuration and an operation of the inspection system of the present exemplary embodiment which is provided on the gantry crane configured as described above will be described.

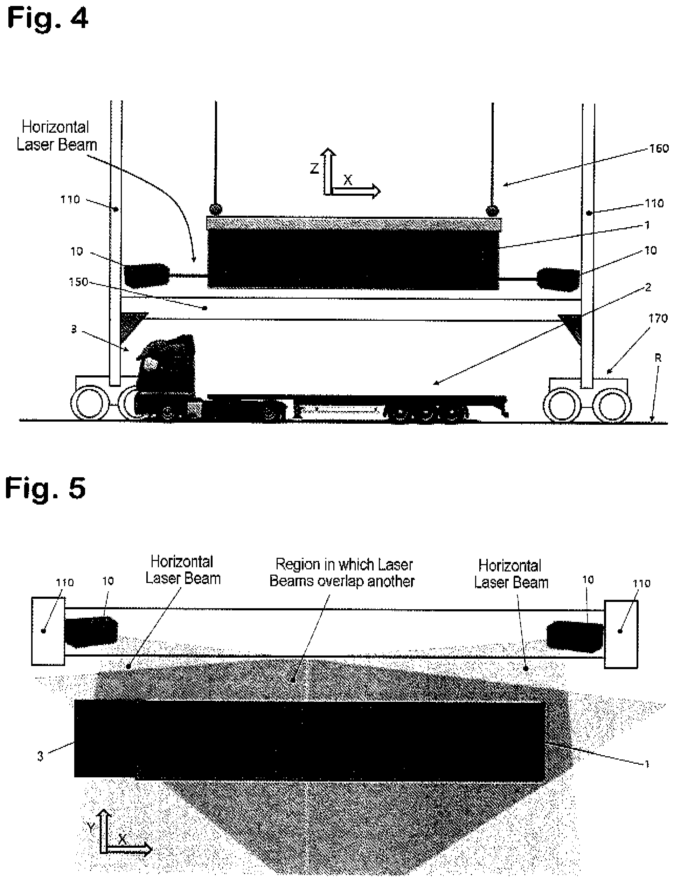

The inspection system includes two laser scanners (10 in FIG. 4), and a control device (not illustrated) which receives scan data obtained by the laser scanners through Ethernet communication from the laser scanners.

The control device serves to process the data received from the laser scanners 10 to form a three-dimensional image, read out the formed image to find out abnormalities, and create an alarm signal. The alarm signal is transmitted to a computer of a management system (not illustrated) that manages the gantry crane 100, such that the management system or operator may stop the operation of the gantry crane and inspect the operation of the gantry crane in the event of an abnormality.

FIGS. 4 and 5 are a front view, a side view, and a perspective view illustrating a state in which the laser scanner 10 is installed and operates. For convenience of illustration and description, the configuration of the gantry crane is briefly illustrated in these drawings, the laser scanner 10 is enlarged, and elements and the like for mounting the laser scanner on the post 110 of the gantry crane 100 are omitted.

Referring to FIG. 4, the two laser scanners 10 are configured in a pair and installed on the two posts 110, respectively, at one side in the Y-axis direction. The pair of laser scanners 10 is also installed on the posts at the opposite side in the Y-axis direction.

The laser scanners 10 are disposed, above the support frames 150, with a height difference of approximately 50 mm therebetween to avoid interference therebetween and disposed on the posts 110, respectively, so as to be spaced apart from each other with a width larger than a length of the container 1, thereby emitting the laser beams horizontally. A height above the ground surface R at which the laser scanners 10 are installed and a height at which the laser scanners 10 emit the laser beams are higher than a height of a roof of the tractor for transporting the container, such that the laser beams are not emitted to the tractor.

The laser scanners 10 are disposed to emit the horizontal laser beams toward the outside of the gantry crane 100, that is, toward the position of the traveling path R on which the tractor 2 stops to load or unload the container 1.

A laser scanning angle of each of the laser scanners 10 is 90°. The container 1 is placed within a range in which the horizontal laser beams emitted from the two laser scanners 10 overlap each other, such that the other laser scanner 10 may emit the laser beam toward a rear side of the container opposite to a side toward which one laser scanner 10 emits the laser beam.

Of course, the two laser scanners 10 are placed at one side in the width direction of the container, such that a side of the container 1 opposite to the gantry crane 100 is not scanned. However, since the inspection system of the present exemplary embodiment is intended to detect the tilt of the container and the presence or absence of a twistlock cone, it is not necessary to scan the rear side of the container.

The gantry crane 100 moves to the position at which the container is to be stacked in the Y-axis direction from. When the tractor 2 stops at this position, the container 1 loaded on a trailer 3 towed by the tractor is placed below the region in which the scanning angles of the laser scanners 10 overlap each other.

In this state, the hoist 160 of the gantry crane moves downward, and the hoist 160 is coupled to the four corners of the container 1 and lifts up the container vertically. When the container moves upward, the two laser scanners 10 emit the horizontal laser beams at a predetermined time interval and receive the reflected laser beams, and scan data obtained at one time from the received laser beams is transmitted to the control device.

The data are sequentially inputted to the control device from the laser scanner 10, line-shaped images of the container are formed from the data of the reflected laser beams made by emitting the laser beams at one time, and the line-shaped images are synthesized by being stacked vertically in the time sequence, such that a three-dimensional image of the container is formed.

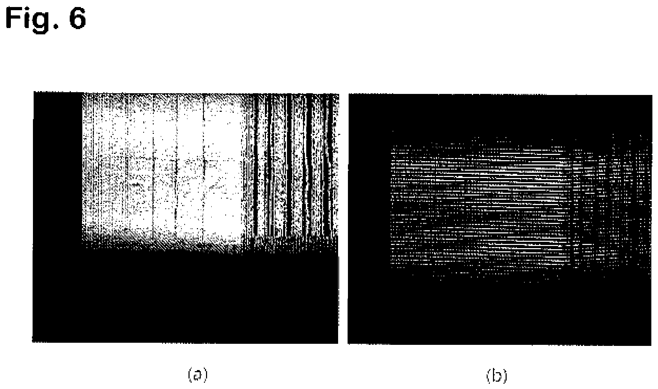

FIGS. 6A and 6B illustrate images of the container with a dimension of 20 feet which are synthesized by the control device, in which FIG. 6A illustrates a synthesized image when the container moves upward at a velocity of 350 mm/sec, and FIG. 6B illustrates a synthesized image when the container moves upward at a velocity of 2167 mm/sec.

As illustrated in FIGS. 6A and 6B, an outer contour of the container is indicated in the image synthesized based on the laser scanning, and particularly, an unreleased twistlock cone, which protrudes from the lower end of the container, is indicated.

In comparing the two images, in the case in which the upward movement velocity of the container is low, the single image of the container is formed by combining a larger number of line images as compared to the case in which the upward movement velocity of the container is high.

The container has a rectangular parallelepiped contour, a lower end surface of the container may be particularly formed as a flat surface so that the containers may be loaded on the trailer and may be stacked on one another at a storage yard, a ship, or the like, and thus the lower end surface of the container has no protruding portion.

Therefore, a contour line, which includes the lower end of the container in the image synthesized by the data received from the laser scanners 10, has a simple line shape. However, in a case in which an unreleased twistlock cone exists on the container, the portion corresponding to the twistlock cone is indicated as a portion protruding from the straight contour line.

In particular, even in a case in which the upward movement velocity of the container varies, the images including the contour line of the container and the protruding portion are also acquired.

By analyzing the contour line, the control device determines that the twistlock cone remains unreleased from the container, and creates the alarm signal to operate a separate alarm device or transmits the alarm signal to the computer of the management system (not illustrated).

Meanwhile, the container may be tilted or a door of the container may be opened when the gantry crane moves the container upward.

Even in this state, in the image formed by the scanning of the laser scanners, a gradient may be formed on a contour of the lower end surface of the container or the protruding portion may be indicated on the contour of the rear surface of the container.

Similar to the twistlock cone, the gradient and the protruding portion may also be determined as abnormalities by the control device, and the alarm signal may be created and the alarm may be sent to the operator.

As described above, according to the inspection system according to the exemplary embodiment of the present invention, the two laser scanners sequentially emit the horizontal laser beams to the container being moved upward by the gantry crane, and the image, which is acquired by receiving the reflected laser beams, is synthesized, such that it is possible to determine the state in which the twistlock cone is attached to the container, the state in which the container is tilted, and the state in which the door of the container is opened, and it is possible to create the alarm signal.

Based on the alarm signal, the operator stops the upward movement of the container and then observes the container again with the naked eye. Then, the operator removes the twistlock cone, closes the door, or adjusts the hoist for moving the container upward to maintain horizontality of the container, and then the operator may restart the process of stacking the container.

### [Explanation of Reference Numerals]

- 1: Container
- 2: Tractor
- 3: Trailer
- 10: Laser scanner
- 100: Gantry crane
- 110: Post
- 120: Upper frame
- 130: Trolley
- 140: Reinforcing frame
- 150: Support frame
- 160: Hoist
- 170: Moving carriage
- R: Ground surface

## Claims

1. An inspection system for container (1) which is unloaded from a ship and is to be loaded by a crane (100) in a load space; the inspection system comprising:
a laser scanner (10) which scans an exterior shape of the container (1) by emitting a laser beam to the container to be loaded in the load space; and
a control device which receives scan data obtained by the laser scanner (10) and forms a three-dimensional image of a scanning target from the received data,
wherein when the crane (100) moves the container (1) upward to load the container (1) in the load space, the laser scanner (10) is configured to scan the exterior shape of the container (1) by sequentially emitting the horizontal laser beams at a height at which the laser scanner (10) is installed, and receiving the reflected laser beams, and the control device forms a three-dimensional image related to a contour of the container (1) from the data received from the laser scanner (10), determines an unreleased twistlock cone and creates an alarm signal when it is determined that there is an image of a portion protruding from a profile of a lower end of the container (1),
wherein multiple laser scanners (10) are provided at a height higher than a height of a transporting vehicle (2, 3) for transporting the container (1) to a traveling path outside the load space, the laser scanners (10) are spaced apart from one another with a width larger than a length of the container (1) and emit the horizontal laser beams within a predetermined angle toward the container (1) placed on the traveling path, and the laser scanners (10) are configured such that the container (1) is placed at a position at which the horizontal laser beams emitted from the multiple laser scanners (10) overlap one another.

2. The inspection system of claim 1, wherein the control device determines an abnormality and creates the alarm signal when the profile of the lower end of the container (1) is tilted from horizontality at a predetermined angle or larger in the three-dimensional image related to the contour of the container (1).

3. The inspection system of claim 1, wherein the control device determines that a door of the container (1) is opened and creates an alarm signal when it is determined that there is an image of a portion protruding from a profile of a rear surface of the container (1) in the three-dimensional image related to the contour of the container (1).

4. The inspection system according to claim 1, wherein the two laser scanners (10) are configured in a pair and installed on two lateral posts (110) of the crane (100), respectively, and above lower support frames (150) of the crane (100) with a maximum height difference of approximately 50 mm therebetween.

## Patentansprüche

1. Kontrollsystem für einen Container (1), der von einem Schiff zu entladen und mit einem Kran (100) auf einen Ladeplatz zu verladen ist; wobei das Kontrollsystem Folgendes aufweist:
einen Laserscanner (10), der eine äußere Form des Containers (1) abtastet, indem er einen Laserstrahl auf den Container aussendet, der auf den Ladeplatz zu verladen ist; und
eine Steuervorrichtung, welche mittels des Laserscanners (10) gewonnene Abtastdaten empfängt und aus den empfangenen Daten ein dreidimensionales Bild eines Abtastobjekts erstellt,
wobei, wenn der Kran (100) den Container (1) nach oben bewegt, um den Container (1) auf den Ladeplatz zu laden, der Laserscanner (10) gestaltet ist, die äußere Form des Containers (1) abzutasten, indem er die horizontalen Laserstrahlen sequentiell in einer Höhe aussendet, in der der Laserscanner (10) installiert ist, und die reflektierten Laserstrahlen empfängt, und wobei die Steuervorrichtung aus den von dem Laserscanner (10) empfangenen Daten ein dreidimensionales Bild in Bezug auf einen Umriss des Containers (1) erstellt, einen nicht gelösten Twistlock-Konus feststellt und ein Alarmsignal erzeugt, wenn festgestellt wird, dass es dort ein Bild eines von einem Profil eines unteren Endes des Containers (1) vorstehenden Abschnitts gibt,
wobei mehrere Laserscanner (10) in einer Höhe vorgesehen sind, die höher ist als eine Höhe eines Transportfahrzeugs (2, 3) zum Transport des Containers (1) auf einen Laufweg außerhalb des Ladeplatzes, wobei die Laserscanner (10) in einem Abstand voneinander angeordnet sind, der größer ist als eine Länge des Containers (1), und die horizontalen Laserstrahlen innerhalb eines vorbestimmten Winkels in Richtung auf den auf dem Laufweg angeordneten Container (1) aussenden, und wobei die Laserscanner (10) derart gestaltet sind, dass der Container (1) an einer Stelle angeordnet wird, an der sich die von den mehreren Laserscannern (10) ausgesendeten horizontalen Laserstrahlen überlappen.

2. Kontrollsystem nach Anspruch 1, wobei die Steuervorrichtung eine Anomalie feststellt und das Alarmsignal erzeugt, wenn das Profil des unteren Endes des Containers (1) in dem dreidimensionalen Bild in Bezug auf den Umriss des Containers (1) um einen vorbestimmten Winkel oder mehr gegenüber der Horizontalen geneigt ist.

3. Kontrollsystem nach Anspruch 1, wobei die Steuervorrichtung feststellt, dass eine Tür des Containers (1) geöffnet ist, und ein Alarmsignal erzeugt, wenn festgestellt wird, dass es in dem dreidimensionalen Bild in Bezug auf den Umriss des Containers (1) ein Bild eines von einem Profil einer hinteren Fläche des Containers (1) vorstehenden Abschnitts gibt.

4. Kontrollsystem nach Anspruch 1, wobei die zwei Laserscanner (10) paarweise gestaltet und jeweils an zwei seitlichen Stützen (110) des Krans (100) sowie oberhalb von unteren Stützrahmen (150) des Krans (100) mit einem maximalen Höhenunterschied von ungefähr 50 mm dazwischen installiert sind.

## Revendications

1. Système d'inspection pour un conteneur (1) devant être déchargé d'un navire et chargé à l'aide d'une grue (100) sur une espace de chargement ; le système d'inspection comprenant :
un scanner laser (10) qui balaye la forme extérieure du conteneur (1) en émettant un faisceau laser sur le conteneur devant être chargé sur l'espace de chargement ; et
un dispositif de commande qui reçoit les données de balayage obtenues au moyen du scanner laser (10) et génère, à partir des données reçues, une image tridimensionnelle d'un objet balayé,
où, lorsque la grue (100) soulève le conteneur (1) afin de charger le conteneur (1) sur l'espace de chargement, le scanner laser (10) est conçu pour balayer la forme extérieure du conteneur (1) en émettant les faisceaux laser horizontaux de manière séquentielle à la hauteur à laquelle le scanner laser (10) est installé, et pour recevoir les faisceaux laser réfléchis, et le dispositif de commande crée, à partir des données reçues par le scanner laser (10), une image tridimensionnelle relative au contour du conteneur (1), détecte un cône de verrouillage à torsion non déverrouillé et génère un signal d'alarme lorsqu'il est détecté qu'il existe une image d'une partie faisant saillie par rapport au profil d'une extrémité inférieure du conteneur (1),
où plusieurs scanners laser (10) étant prévus à une hauteur supérieure à celle d'un véhicule de transport (2, 3) destiné à transporter le conteneur (1) sur un parcours situé à l'extérieur de l'espace de chargement, les scanners laser (10) étant espacés les uns des autres d'une distance supérieure à la longueur du conteneur (1), et émettant des faisceaux laser horizontaux dans un angle prédéterminé en direction du conteneur (1) disposé sur le parcours, et les scanners laser (10) étant conçus de telle sorte que le conteneur (1) soit disposé à un emplacement dans lequel les faisceaux laser horizontaux émis par les multiples scanners laser (10) se chevauchent.

2. Système d'inspection selon la revendication 1, où le dispositif de commande détecte une anomalie et génère le signal d'alarme lorsque le profil de l'extrémité inférieure du conteneur (1) dans l'image tridimensionnelle est incliné d'un angle prédéterminé ou plus par rapport à l'horizontale, par rapport au contour du conteneur (1).

3. Système d'inspection selon la revendication 1, où le dispositif de commande détecte qu'une porte du conteneur (1) est ouverte et génère un signal d'alarme lorsqu'il est détecté, dans l'image tridimensionnelle, par rapport au contour du conteneur (1), une image d'une partie faisant saillie par rapport au profil d'une face arrière du conteneur (1).

4. Système d'inspection selon la revendication 1, où les deux scanners laser (10) sont agencés par paires et sont installés respectivement sur deux supports latéraux (110) de la grue (100) ainsi qu'au-dessus de cadres de support inférieurs (150) de la grue (100), avec une différence de hauteur maximale d'environ 50 mm entre eux.
